# EUROPEAN PATENT APPLICATION

(11) **EP 4 307 745 A1**
(43) Date of publication of application: **17.01.2024**
(21) Application number: 23171246.4
(22) Date of filing: 03.05.2023
(51) Int. Cl.: H04W 12/63, H04L 9/40

(54) **ACCESS CONTROL METHOD AND ACCESS CONTROL PROGRAM**

(30) Priority: 12.07.2022 JP 2022111746
(71) Applicant: Fujitsu Limited, Kawasaki-shi, Kanagawa 211-8588 (JP)
(72) Inventor: GUO, Zhaogong, Kawasaki-shi, Kanagawa 211-8588 (JP); NODA, Masahide, Kawasaki-shi, Kanagawa 211-8588 (JP); IMAI, Tomoharu, Kawasaki-shi, Kanagawa 211-8588 (JP); KUNIKAWA, Masashi, Kawasaki-shi, Kanagawa 211-8588 (JP); YOKOTA, Koichi, Kawasaki-shi, Kanagawa 211-8588 (JP)
(74) Representative: Hoffmann Eitle

(57) **Abstract**

An access control method performed by a computer, the method including: in a case where an access to data stored in a second user object included in a plurality of objects is accepted from a first system user that corresponds to a first user object included in the plurality of objects, for a management system that manages the plurality of objects that includes a user object that manages a system user and a location object that manages a location and a master-slave relationship between the user object and the location object, determining whether there is the first user object in a way in which the master-slave relationship is traced as starting from the second user object, and in a case where there is the first user object, permitting the access.

## Description

### FIELD

This case discussed herein is related to an access control method and an access control program.

### BACKGROUND

A technology is known for controlling an access to data when an access destination system responds to a request from an access source system, in order to access data in a different system different a system that a user is using. Furthermore, a technology called digital twin is known, and a technology is also known for controlling an access to data at the time of an access from a system that a user is using to data of a digital twin system in which this technology is implemented.

Note that the digital twin is a technology that collects a large amount of data from the real world that is changing from hour to hour and virtually constructs and reproduces the real world in a cyberspace. By using the digital twin, virtual cities, people, and phenomena are reproduced, and large-scale simulations can be realized. For example, it will be possible to avoid traffic jams, improve efficiency of deliveries, and the like, using position data of a large number of vehicles.

Japanese Laid-open Patent Publication No. 2015-187777 and U.S. Patent Application Publication No. 2019/0294978 are disclosed as related art.

### SUMMARY

### TECHNICAL PROBLEM

Access control at the time of the access from the system that the user is using to the data of the digital twin system is performed using control information called an access control list (ACL). In the ACL, a person who has access authority to data, an operation that can be performed on data, permission or denial of an access to data, or the like are registered. In a case where content registered in the ACL is updated, a system administrator of the digital twin system is required to update the content each time.

However, in a situation where a large amount of data from the real world flows into the digital twin system, to update the ACL each time by the system administrator and to register whether an access from where to which data is permitted or denied are extremely complicated tasks.

For example, in a case where a general affairs department of a company or the like recognizes position data of an employee using a system in which software for managing attendance of the employee of the company is implemented, in the working hours, it is sufficient for the system administrator to register that the access to the position data is permitted, in the ACL. On the other hand, outside of working hours, from viewpoint of ensuring privacy of the employee, the system administrator is required to register that the access to the position data is denied, in the ACL. It is extremely difficult to perform such a work each working day.

Therefore, in one aspect, an object is to provide an access control method and an access control program that avoid access control using an ACL.

According to an aspect of the embodiments, an access control method performed by a computer, the method includes: in a case where an access to data stored in a second user object included in a plurality of objects is accepted from a first system user that corresponds to a first user object included in the plurality of objects, for a management system that manages the plurality of objects that includes a user object that manages a system user and a location object that manages a location and a master-slave relationship between the user object and the location object, determining whether there is the first user object in a way in which the master-slave relationship is traced as starting from the second user object, and in a case where there is the first user object, permitting the access.

### BRIEF DESCRIPTION OF DRAWINGS

FIG. 1 is a diagram for explaining an example of an access control system;
FIG. 2 is a diagram for explaining an example of a plurality of objects and a master-slave relationship;
FIG. 3 is an example of a hardware configuration of an access control device;
FIG. 4A is an example of a functional configuration of an access control device according to a first embodiment; FIG. 4B is an example of a relationship table according to the first embodiment;
FIG. 5 is a flowchart illustrating an example of processing executed by an application programming interface (API) server;
FIG. 6 is a flowchart illustrating an example of processing executed by the access control device according to the first embodiment;
FIG. 7 is a diagram for explaining an example of an API request, a first API response, and a second API response;
FIG. 8 is a diagram for explaining an example of access control according to the first embodiment;
FIG. 9A is an example of a functional configuration of an access control device according to a comparative example; FIG. 9B is an example of an access control list;
FIG. 10 is a flowchart illustrating an example of a part of processing executed by an access control device according to a second embodiment;
FIG. 11 is a diagram for explaining an example of access control according to the second embodiment;
FIG. 12A is a diagram for explaining an example of access control according to a third embodiment; FIG. 12B is an example of a relationship table according to the third embodiment;
FIG. 13A is a diagram for explaining an example of access control according to a fourth embodiment; and FIG. 13B is an example of a relationship table according to the fourth embodiment.

### DESCRIPTION OF EMBODIMENTS

Hereinafter, modes for carrying out this case will be described with reference to the drawings.

### (First Embodiment)

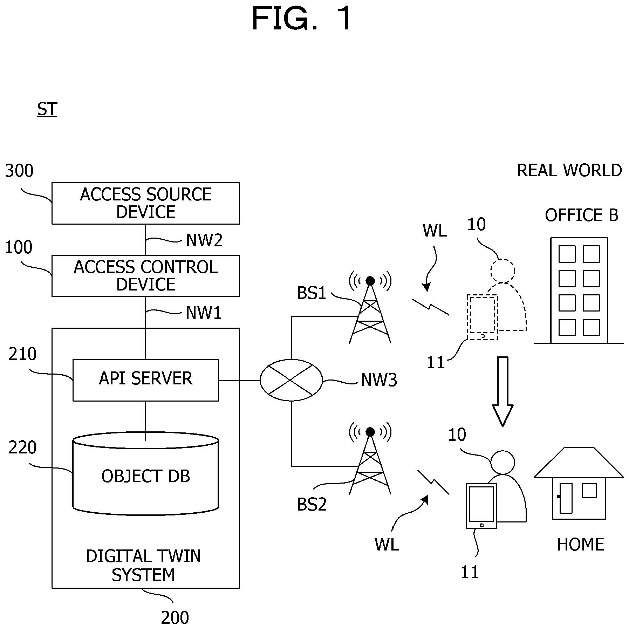

As illustrated in FIG. 1, an access control system ST includes an access control device 100, a digital twin system 200, and an access source device 300. The digital twin system 200 is an example of a management system. The access control device 100 is arranged between the digital twin system 200 and the access source device 300. The access control device 100 is coupled to the digital twin system 200 via a communication network NW1. The access control device 100 is coupled to the access source device 300 via a communication network NW2. The communication networks NW1 and NW2 may be local area networks (LAN) or may be the Internet.

The digital twin system 200 includes an application programming interface (API) server 210 and an object database (DB) 220. The API server 210 receives an API request transmitted from the access control device 100. The API server 210 transmits an API response corresponding to the received API request to the access control device 100.

The API server 210 is coupled to wireless base stations BS1 and BS2 via a communication network NW3. The communication network NW3 includes, for example, the Internet. The wireless base station BS1 receives, for example, data transmitted from a mobile terminal 11 of an employee 10 who works at an office B of a company through wireless communication WL. In this way, the wireless base station BS1 receives real-world data. Since the mobile terminal 11 includes a global position systems (GPS), the mobile terminal 11 can transmit position data of the mobile terminal 11 specified by the GPS as position data of the employee 10. Note that the mobile terminal 11 may be a smartphone or a tablet terminal.

When working hours of the company end, the employee 10 moves toward home and stays at home. The wireless base station BS2 receives the position data transmitted from the mobile terminal 11 of the employee 10 who is staying at home, through the wireless communication WL. When receiving the position data of the employee 10, each of the wireless base stations BS1 and BS2 transmits the position data of the employee 10 to the API server 210. When receiving the position data of the employee 10, the API server 210 updates the object DB 220, based on the received position data.

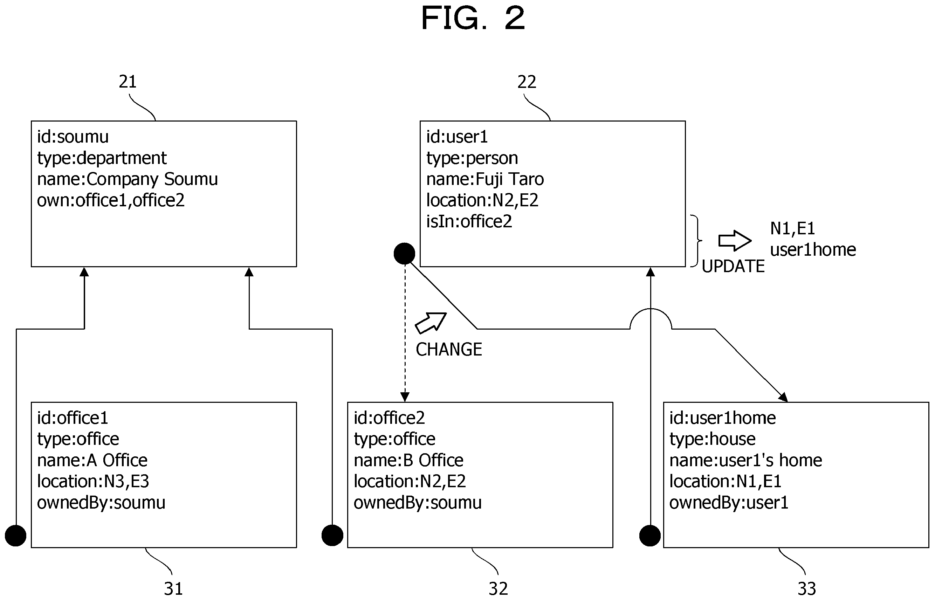

The object DB 220 stores a plurality of objects. In a case of being expressed using a data format called the Linked-Data format, each object may be called an entity. As illustrated in FIG. 2, the plurality of objects includes a first user object 21 and a second user object 22. Furthermore, the plurality of objects includes a first location object 31, a second location object 32, and a third location object 33. The plurality of objects is identified by using an identifier (id).

The first user object 21 and the second user object 22 are objects used to manage a system user who uses the digital twin system 200. For example, the second user object 22 is an object used to manage the employee 10 who uses the digital twin system 200. In other words, in the second user object 22, an identifier "user1" is assigned to the employee 10. The first location object 31, the second location object 32, and the third location object 33 are objects used to manage locations. For example, the second location object 32 is an object used to manage the office B. The third location object 33 is an object used to manage home.

The first user object 21 and the second user object 22, and the first location object 31, the second location object 32, and the third location object 33 are associated by a relationship °isIn" or a relationship "ownedBy". The relationship represents a master-slave relationship between the first user object 21 and the second user object 22, and the first location object 31, the second location object 32, and the third location object 33. In other words, the relationship is an example of a master-slave relationship.

For example, the second user object 22 and the second location object 32 are associated by the relationship °isIn". In a case of the relationship "isIn", the second location object 32 where a front end of a dashed arrow is located corresponds to a slave object. The second user object 22 where a base of the dashed arrow is located corresponds to a master object. According to the master-slave relationship between the second user object 22 and the second location object 32, it is specified that the employee 10 stays at the office B. In a case of the relationship °ownedBy", the master-slave relationship indicated by the arrow is reversed.

Furthermore, the second user object 22 and the third location object 33 are associated by the relationship "ownedBy". In this case, the third location object 33 where the base of the arrow is located corresponds to the slave object. The second user object 22 where the front end of the arrow is located corresponds to the master object. According to the master-slave relationship between the second user object 22 and the third location object 33, it is specified that the employee 10 owns or controls the home.

Here, when the API server 210 receives the position data of the employee 10 from the wireless base station BS2, the API server 210 updates position data of the second user object 22, based on the received position data. Specifically, the API server 210 updates position data "N2, E2" representing the position of the office B at the location (location) of the second user object 22, using a latitude and a longitude to position data "N1, E1" representing the position of the home using a latitude and a longitude. Furthermore, the API server 210 updates an identifier "office2" associated with the relationship °isIn" to an identifier "user1home", in addition to the update of the position data.

As a result, the master-slave relationship of the second user object 22 is changed. Specifically, the master-slave relationship between the second user object 22 and the second location object 32 is changed to the master-slave relationship between the second user object 22 and the third location object 33. According to the master-slave relationship between the second user object 22 and the third location object 33, it is specified that the employee 10 stays at home.

Returning to FIG. 1, the access control device 100 controls an access to the digital twin system 200 from the access source device 300. The access source device 300 is, for example, a computer such as a server device. In the access source device 300, for example, application software that manages attendance of the employee 10 who belongs to the company (hereinafter, referred to as attendance management application) is implemented (specifically, installed). The attendance management application is used to manage attendance, a working status, or the like of the employee 10 by a general affairs department, a personnel department, or the like of a company, for example.

The attendance management application accesses the digital twin system 200 with an authority of a general affairs department, for example. More specifically, the attendance management application accesses the position data of the second user object 22 with the authority of the general affairs department. When the attendance management application accesses the position data, the access control device 100 dynamically determines whether to permit the access to the position data. Although details will be described later, the access control device 100 determines whether to permit the access, based on a relationship between the plurality of objects specified by the relationship, without using the ACL. For example, if the employee 10 stays at the office B, the access control device 100 permits the access to the position data. If the employee 10 stays at home, the access control device 100 denies the access to the position data.

In this way, the access control device 100 dynamically determines whether to permit the access to the position data, based on the relationship between the plurality of objects. Therefore, it is possible to avoid access control using the ACL and to avoid a complicated work such as update of the ACL. Note that, in the present embodiment, the attendance management application accesses the digital twin system 200 with the authority of the general affairs department. Therefore, not only the employee 10 but also the general affairs department are included in the system users of the digital twin system 200. Therefore, as illustrated in FIG. 2, the first user object 21 is an object used to manage the general affairs department that uses the digital twin system 200.

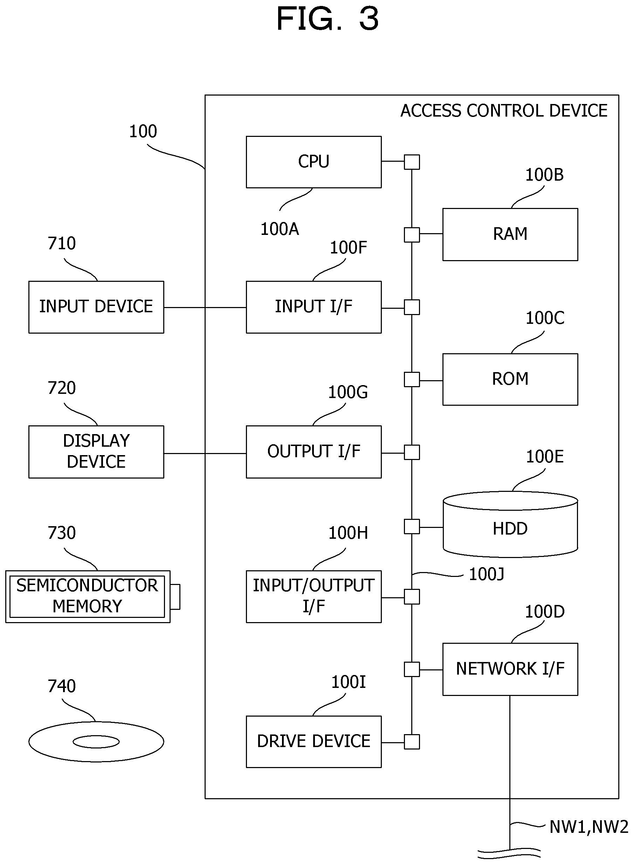

Next, a hardware configuration of the access control device 100 will be described with reference to FIG. 3. Note that, since the mobile terminal 11, the API server 210, and the access source device 300 have hardware configurations basically similar to the hardware configuration of the access control device 100, detailed description will be omitted.

The access control device 100 includes a central processing unit (CPU) 100A as a processor, a random access memory (RAM) 100B, and a read only memory (ROM) 100C. The access control device 100 includes a network interface (I/F) 100D and a hard disk drive (HDD) 100E. Instead of the CPU 100A, a graphics processing unit (GPU) may be adopted as a processor. Instead of the hard disk drive (HDD) 100E, a solid state drive (SSD) may be adopted.

The access control device 100 may also include at least one of an input I/F 100F, an output I/F 100G, an input/output I/F 100H, and a drive device 100I, as needed. The CPU 100A to the drive device 100I are coupled to each other with an internal bus 100J. In other words, the access control device 100 can be implemented by a computer.

An input device 710 is coupled to the input I/F 100F. The input device 710 includes, for example, a keyboard, a mouse, a touch panel, or the like. A display device 720 is coupled to the output I/F 100G. The display device 720 includes, for example, a liquid crystal display or the like. A semiconductor memory 730 is coupled to the input/output I/F 100H. For example, the semiconductor memory 730 includes a universal serial bus (USB) memory, a flash memory, or the like. The input/output I/F 100H reads an access control program stored in the semiconductor memory 730. The input I/F 100F and the input/output I/F 100H include, for example, USB ports. The output I/F 100G includes, for example, a display port.

A portable recording medium 740 is inserted into the drive device 100I. The portable recording medium 740 includes, for example, a removable disk such as a compact disc (CD)-ROM or a digital versatile disc (DVD). The drive device 100I reads an access control program recorded in the portable recording medium 740. The network I/F 100D includes, for example, a LAN port, a communication circuit, or the like. The network I/F 100D is coupled to the communication networks NW1 and NW2.

The access control program stored in at least one of the ROM 100C, the HDD 100E, and the semiconductor memory 730 is temporarily stored in the RAM 100B by the CPU 100A. The access control program recorded in the portable recording medium 740 is temporarily stored in the RAM 100B by the CPU 100A. By executing the stored access control program by the CPU 100A, the CPU 100A implements various functions to be described later, and in addition, executes an access control method including various types of processing to be described later. Note that it is sufficient that the access control program be in accordance with a flowchart to be described later.

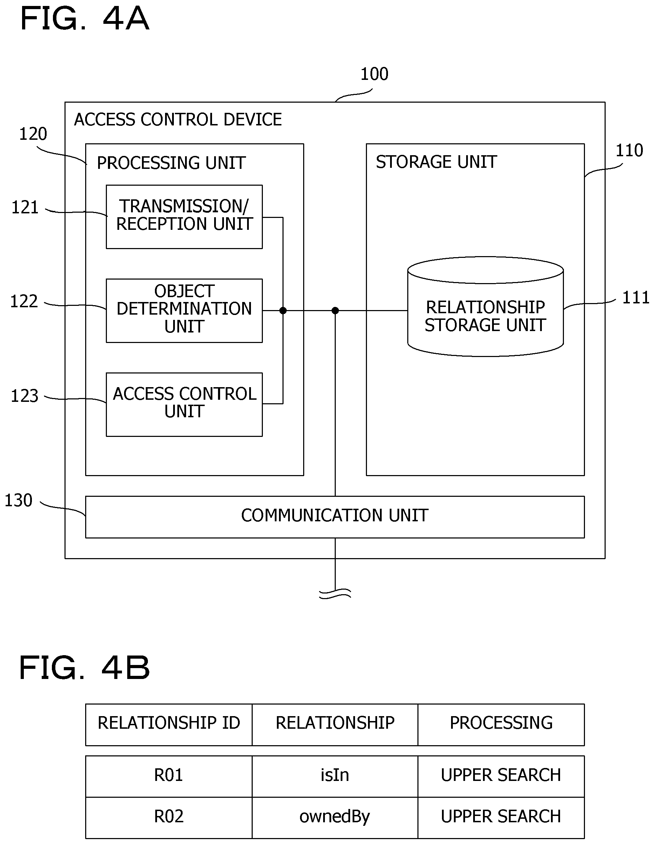

A functional configuration of the access control device 100 will be described with reference to FIGs. 4A and 4B. Note that, in FIG. 4A, a main portion of the functions of the access control device 100 is illustrated.

As illustrated in FIG. 4A, the access control device 100 includes a storage unit 110, a processing unit 120, and a communication unit 130. The storage unit 110 can be implemented by one or both of the RAM 100B and the HDD 100E described above. The processing unit 120 can be implemented by the CPU 100A described above. The communication unit 130 can be implemented by the network I/F 100D described above.

The storage unit 110, the processing unit 120, and the communication unit 130 are coupled to each other. Here, the storage unit 110 includes a relationship storage unit 111. The processing unit 120 includes a transmission/reception unit 121, an object determination unit 122, and an access control unit 123.

The relationship storage unit 111 stores the relationship described above. As illustrated in FIG. 4B, the relationship is managed by a relationship table. In the relationship table, for each relationship ID used to identify a relationship, a combination of the relationship ID, a relationship, and processing according to the relationship is managed. For example, processing "upper search" is associated with a relationship "isIn" of a relationship ID "R01". Although details will be described later, the processing "upper search" represents that an object where the front end of the arrow is located, described with reference to FIG. 2, is searched as a superior object.

The transmission/reception unit 121 receives an API request transmitted from the access source device 300. By receiving the API request, the transmission/reception unit 121 accepts an access to the position data stored in the second user object 22 from the general affairs department corresponding to the first user object 21. Upon receiving the API request, the transmission/reception unit 121 transmits the API request to the API server 210. The transmission/reception unit 121 receives an API response transmitted in response to the API request from the API server 210.

In a case where the transmission/reception unit 121 accepts the access to the position data, the object determination unit 122 determines whether the first user object 21 is located in a way through the relationship, starting from the second user object 22. In a case where the first user object 21 is located in the way through the relationship, the access control unit 123 permits to access the position data. In a case where the first user object 21 is not located in the way through the relationship, the access control unit 123 denies the access to the position data. Note that details of the transmission/reception unit 121, the object determination unit 122, and the access control unit 123 will be described later.

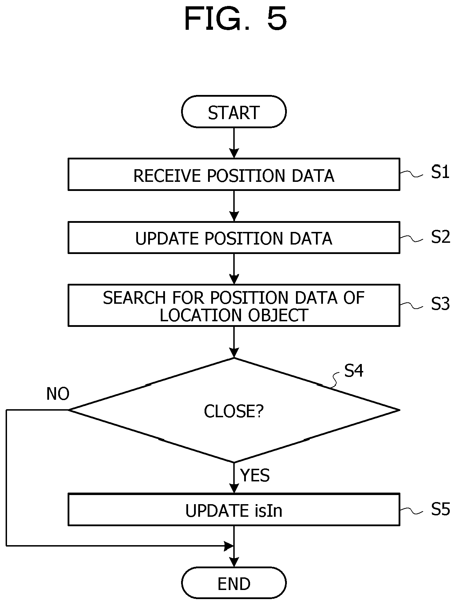

Next, an operation of the API server 210 will be described with reference to FIG. 5. Note that the API server 210 periodically (for example, in units of several minutes such as five minutes) executes processing in the flowchart illustrated in FIG. 5. First, the API server 210 receives the position data of the employee 10 transmitted from the mobile terminal 11 (step S1). When receiving the position data, the API server 210 updates the position data of the second user object 22, based on the received position data (step S2). The position data includes the identifier "user1" used to identify the employee 10. Therefore, the API server 210 can specify the second user object 22 from the object DB 220. In this way, the API server 210 dynamically updates the position data, based on movements of the employee 10.

After the update, the API server 210 refers to the object DB 220, and searches for position data at the location (location) of each of the first location object 31, the second location object 32, and the third location object 33 (step S3). Then, the API server 210 determines whether there is position data close to the updated position data (step S4). Whether the pieces of position data are close to each other can be determined, for example, according to whether one of the pieces of position data is located within a radius of several tens centimeters of the updated position data.

In a case where there is no position data close to the updated position data (step S4: NO), the API server 210 skips subsequent processing and ends the processing. In a case where there is the position data close to the updated position data (step S4: YES), the API server 210 updates the relationship °isIn" (step S5) and ends the processing.

For example, if the updated position data is close to (or matches) the position data representing the position of the office B, the API server 210 updates the identifier of the relationship °isIn" of the second user object 22 to an identifier "office2" (refer to FIG. 2). If the updated position data is close to (or matches) the position data representing the position of the home, the API server 210 updates the identifier of the relationship °isIn" of the second user object 22 to an identifier "user1home". In this way, the API server 210 dynamically updates the relationship between the plurality of objects, based on the position data of the employee 10 transmitted from the mobile terminal 11.

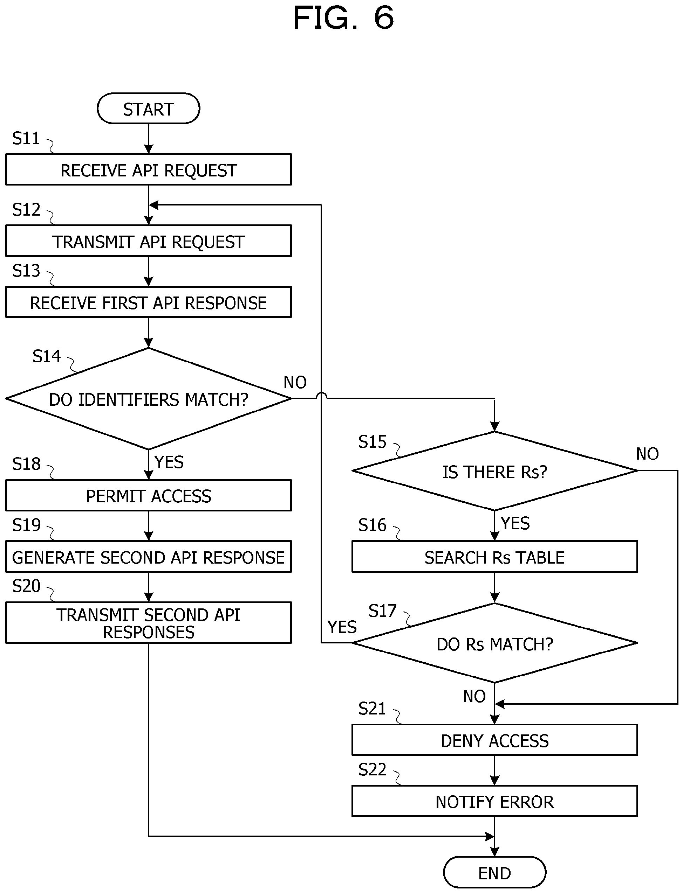

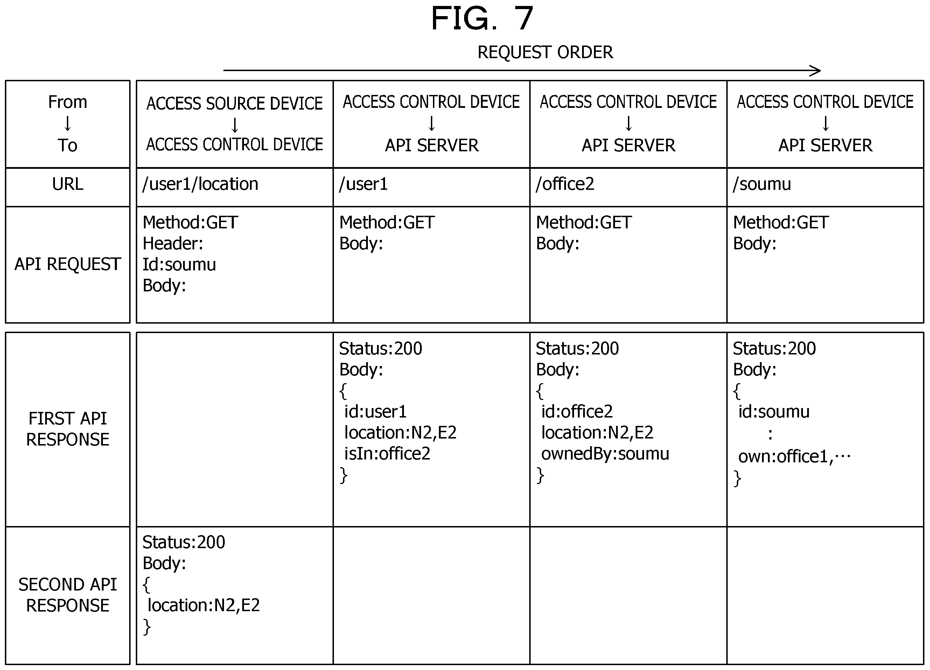

Next, an operation of the access control device 100 that executes the access control method will be described with reference to FIGs. 6 and 7.

First, as illustrated in FIG. 6, the transmission/reception unit 121 receives an API request transmitted from the access source device 300 (step S11). As illustrated in FIG. 7, in a case where the API request is transmitted from the access source device 300 to the access control device 100, a uniform resource locator (URL) is specified and the API request is transmitted. In the present embodiment, a URL "user1/location" that associates the identifier "user1" with an item "location" representing a storage destination of the position data is specified. An access to the position data stored in the second user object 22 is specified based on the URL. Furthermore, the API request stores an instruction "GET" to acquire position data and an identifier "soumu" used to determine an access source. Based on the URL and the API request, the transmission/reception unit 121 determines that the attendance management application requests the position data of the employee 10 with the authority of the general affairs department. Note that the transmission/reception unit 121 holds the identifier "soumu" for subsequent determination processing.

Upon receiving the API request, the transmission/reception unit 121 transmits the API request to the API server 210 (step S12). When transmitting the API request, as illustrated in FIG. 7, the transmission/reception unit 121 converts the URL "user1/location" into an URL "user1". In other words, the transmission/reception unit 121 converts the API request that requests an access to the position data into an API request that requests the access to the second user object 22. This is because the position data is not associated with the object by the relationship. By converting the API request, even in a case where acquisition of the position data is requested, the relationship between the objects can be traced. Note that, in a case where the transmission/reception unit 121 receives the API request that requests the access to the second user object 22, the transmission/reception unit 121 directly transmits the API request to the API server 210 without converting the API request. The transmission/reception unit 121 transmits an API request excluding the identifier "soumu" used to identify the access source, regardless of whether the API request is converted.

When transmitting the API request, the transmission/reception unit 121 receives a first API response (step S13). More specifically, the transmission/reception unit 121 receives the first API response corresponding to the API request from the API server 210. As illustrated in FIG. 7, since the identifier "user1" is specified as a URL, data included in the second user object 22 is stored in the first API response corresponding to the API request. If the employee 10 stays at the office B, the identifier "user1", the position data "N2, E2" representing the position of the office B, and the identifier "office2" associated with the relationship "isIn" are stored in the first API response.

Upon receiving the first API response, the object determination unit 122 determines whether the identifiers match (step S14). More specifically, the object determination unit 122 determines whether the identifier stored in the first API response matches the identifier held by the transmission/reception unit 121. In the present embodiment, the identifier "office2" is stored in the first API response. On the other hand, the transmission/reception unit 121 holds the identifier "soumu". Therefore, in the present embodiment, the object determination unit 122 determines that the identifiers do not match.

In a case where the identifiers do not match (step S14: NO), the object determination unit 122 determines whether there is a relationship (described as Rs in FIG. 6) (step S15). More specifically, the object determination unit 122 determines whether the relationship is included in the first API response. In the present embodiment, the relationship °isIn" is stored in the first API response. Therefore, according to the present embodiment, the object determination unit 122 determines that there is a relationship.

In a case where there is a relationship (step S15: YES), the object determination unit 122 searches the relationship table (step S16), and determines whether the relationships match (step S17). In other words, the object determination unit 122 refers to the relationship storage unit 111 and determines whether a relationship that matches the relationship stored in the first API response is included in the relationship table (refer to FIG. 4B). In the present embodiment, the relationship °isIn" is stored in the first API response. On the other hand, the relationship °isIn" is stored in the relationship table. Therefore, according to the present embodiment, the object determination unit 122 determines that the relationships match.

In a case where the relationships match (step S17: YES), the procedure returns to the processing in step S12, and the transmission/reception unit 121 transmits the API request to the API server 210. In this case, as illustrated in FIG. 7, the transmission/reception unit 121 specifies the identifier "office2" associated with the relationship "isIn" stored in the first API response as a URL, and transmits the API request. In other words, the transmission/reception unit 121 transmits the API request that requests the access to the second location object 32. In this way, the access control device 100 traces the second location object 32 starting from the second user object 22, based on the relationship.

When transmitting the API request, according to the processing in step S13, the transmission/reception unit 121 receives the first API response corresponding to the API request from the API server 210. As illustrated in FIG. 7, since the identifier "office2" is specified as the URL, the data included in the second location object 32 is stored in the first API response corresponding to the API request. Therefore, the identifier "office2", the position data "N2, E2" representing the position of the office B, and the identifier "soumu" associated with the relationship °ownedBy" are stored in the first API response. According to the second location object 32, the office B is owned or controlled by the general affairs department.

Upon receiving the first API response, according to the processing in step S14, the object determination unit 122 determines whether the identifier stored in the first API response matches the identifier held by the transmission/reception unit 121. In the present embodiment, the identifier "office2" is stored in the first API response. On the other hand, the transmission/reception unit 121 holds the identifier "soumu". Therefore, in the present embodiment, the object determination unit 122 determines that the identifiers do not match.

In a case where the identifiers do not match, the object determination unit 122 determines whether the relationship is included in the first API response according to the processing in step S15. In the present embodiment, the relationship °ownedBy" is stored in the first API response. Therefore, according to the present embodiment, the object determination unit 122 determines that there is a relationship.

In a case where the relationship is included, according to the processing in steps S16 and S17, the object determination unit 122 searches the relationship table and determines whether the relationships match. In the present embodiment, the relationship "ownedBy" is stored in the first API response. On the other hand, the relationship °ownedBy" is stored in the relationship table (refer to FIG. 4B). Therefore, according to the present embodiment, the object determination unit 122 determines that the relationships match.

In a case where the relationships match, the procedure returns to the processing in step S12, the transmission/reception unit 121 transmits the API request to the API server 210. In this case, as illustrated in FIG. 7, the transmission/reception unit 121 specifies the identifier "soumu" associated with the relationship "ownedBy" stored in the first API response as a URL and transmits the API request. In other words, the transmission/reception unit 121 transmits the API request that requests the access to the first user object 21. In this way, the access control device 100 further traces the first user object 21 starting from the second user object 22, based on the relationship.

When transmitting the API request, according to the processing in step S13, the transmission/reception unit 121 receives the first API response corresponding to the API request from the API server 210. As illustrated in FIG. 7, since the identifier "soumu" is specified as the URL, data included in the first user object 21 is stored in the first API response corresponding to the API request. Therefore, the identifier "soumu", ..., own (own) "office1, ..." are stored in the first API response. According to the first user object 21, the general affairs department owns or controls the office B and an office A.

Upon receiving the first API response, according to the processing in step S14, the object determination unit 122 determines whether the identifier stored in the first API response matches the identifier held by the transmission/reception unit 121. In the present embodiment, the identifier "soumu" is stored in the first API response. On the other hand, the transmission/reception unit 121 holds the identifier "soumu". Therefore, in the present embodiment, the object determination unit 122 determines that the identifiers match.

In a case where the identifiers match (step S14: YES), the access control unit 123 permits an access (step S18). In this case, the access control unit 123 generates a second API response (step S19). More specifically, as illustrated in FIG. 7, the access control unit 123 generates the second API response corresponding to the API request transmitted from the access source device 300.

In the second API response, the position data "N2, E2" representing that the employee 10 stays at the office B is stored. In a case where the position data "N2, E2" is stored in the second API response, for example, the access control unit 123 first specifies a first API response in which the identifier "user1" is stored, from among a plurality of first API responses received by the transmission/reception unit 121 in the past. Then, it is sufficient that the access control unit 123 extract position data "N2, E2" stored in the specified first API response and store the extracted position data "N2, E2" in the second API response.

When the access control unit 123 generates the second API response, the transmission/reception unit 121 transmits the second API response (step S20). In other words, the transmission/reception unit 121 transmits the second API response corresponding to the API request transmitted from the access source device 300, to the access source device 300. When the transmission/reception unit 121 transmits the second API response, the access control device 100 ends the processing.

In this way, in a case where the attendance management application requests to acquire the position data of the employee 10 with the authority of the general affairs department, the access control device 100 determines whether the first user object 21 is included in the way through the relationship, starting from the second user object 22. In a case where the first user object 21 is included in the way through the relationship, the access control device 100 permits an access to the position data and transmits the position data. As a result, the general affairs department that uses the attendance management application can recognize the position of the employee 10.

Here, when the employee 10 moves from the office B to home and stays at home, the position data "N2, E2" of the second user object 22 is updated to the position data "N1, E1" (refer to FIG. 2). Furthermore, the identifier "office2" associated with the relationship °isIn" of the second user object 22 is updated to the identifier "user1home" (refer to FIG. 2).

As a result, in FIG. 7, the position data "N1, E1" is stored in the first API response corresponding to the API request in which the identifier "user1" is specified as a URL. Furthermore, in the first API response, the identifier "user1home" is associated with the relationship °isIn".

Therefore, in the processing in step S14, if the transmission/reception unit 121 holds the identifier "soumu", the identifier "soumu" does not match the identifier "office2" stored in the first API response. Therefore, the object determination unit 122 determines that the identifiers do not match. In a case where the identifiers do not match, the object determination unit 122 determines whether the relationship is included in the first API response according to the processing in step S15. In the present embodiment, the relationship °isIn" is stored in the first API response. Therefore, according to the present embodiment, the object determination unit 122 determines that there is a relationship.

In a case where the relationship is included, according to the processing in steps S16 and S17, the object determination unit 122 searches the relationship table and determines whether the relationships match. In the present embodiment, the relationship °isIn" is stored in the first API response. On the other hand, the relationship °isIn" is stored in the relationship table. Therefore, according to the present embodiment, the object determination unit 122 determines that the relationships match.

Since the relationships match, the procedure returns to the processing in step S12, the transmission/reception unit 121 transmits the API request to the API server 210. In this case, the transmission/reception unit 121 specifies the identifier "user1home" associated with the relationship "isIn" stored in the first API response as a URL, and transmits the API request. In other words, the transmission/reception unit 121 transmits the API request that requests the access to the third location object 33. In this way, the access control device 100 traces the third location object 33 starting from the second user object 22, based on the relationship.

When transmitting the API request, according to the processing in step S13, the transmission/reception unit 121 receives the first API response corresponding to the API request from the API server 210. Since the identifier "user1home" is specified as the URL, the data included in the third location object 33 is stored in the first API response corresponding to the API request. Therefore, the identifier "user1home", ..., and the identifier "user1" associated with the relationship °ownedBy" are stored in the first API response. According to the third location object 33, the home is owned or controlled by the employee 10.

Upon receiving the first API response, according to the processing in step S14, the object determination unit 122 determines whether the identifier stored in the first API response matches the identifier held by the transmission/reception unit 121. In the present embodiment, the identifier "user1" is stored in the first API response. On the other hand, the transmission/reception unit 121 holds the identifier "soumu". Therefore, in the present embodiment, the object determination unit 122 determines that the identifiers do not match.

In this way, in the present embodiment, when steps S14 to S17 are repeated, the identifier "user1" or the identifier "user1home" is repeated, and the identifier does not match the identifier "soumu" held by the transmission/reception unit 121. Therefore, in a case of such loop processing, when the number of loops reaches a predetermined number of times, in the present embodiment, the object determination unit 122 determines that there is no relationship in the processing in step S15 (step S15: NO). Alternatively, when the number of loops reaches the predetermined number of times, in the present embodiment, the object determination unit 122 determines that the relationships do not match in the processing in step S17 (step S17: NO).

In a case of no relationship, or in a case where the relationships do not match, the access control unit 123 denies the access (step S21). In this case, the transmission/reception unit 121 notifies the access source device 300 of an error (step S22). When the error is notified, the access control device 100 ends the processing.

In this way, even if the attendance management application requests to acquire the position data of the employee 10 with the authority of the general affairs department, there is case where there is no first user object 21 in the way in which the access control device 100 traces the relationship starting from the second user object 22. In this case, the access control device 100 denies the access to the position data. As a result, if the employee 10 moves from the office B to home and stays at home, privacy of the employee 10 can be ensured.

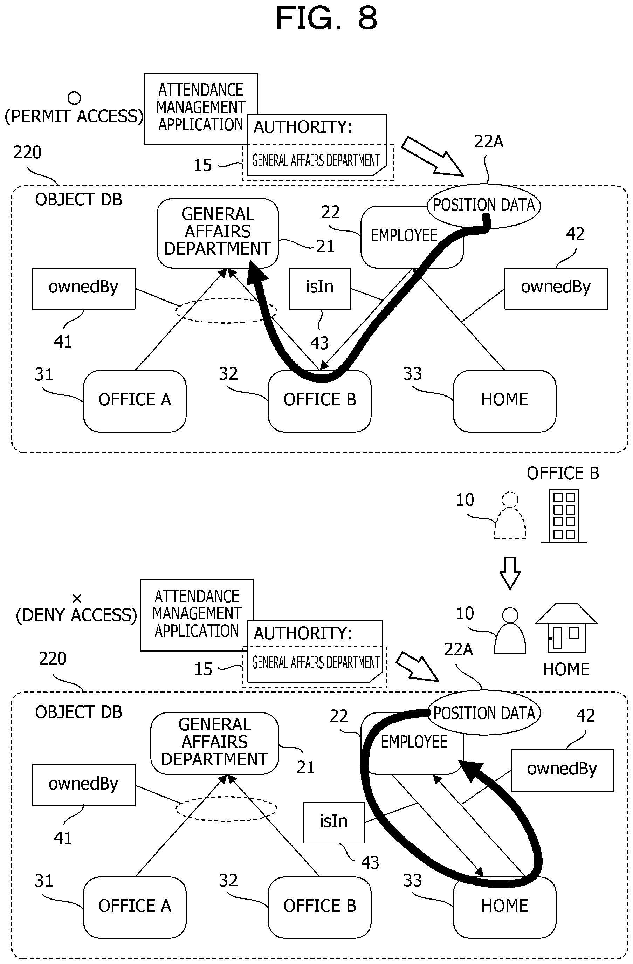

With reference to FIG. 8, permission and denial of the access to the position data of the employee 10 will be further described. In a case where position data 22A illustrated in FIG. 8 is expressed using a data format called a Linked-Data format, the position data 22A may be called a property.

First, as illustrated in the upper portion of FIG. 8, the object DB 220 stores the first user object 21 that manages a general affairs department 15 of a company as a system user and the second user object 22 that manages the employee 10 as a system user. Furthermore, the object DB 220 stores the first location object 31 that manages the office A, the second location object 32 that manages the office B, and the third location object 33 that manages the home of the employee 10.

A master-slave relationship between the first user object 21, the first location object 31, and the second location object 32 is defined by a relationship "ownedBy" 41. A master-slave relationship between the second user object 22 and the third location object 33 is defined by a relationship "ownedBy" 42. Since the employee 10 stays at the office B, a master-slave relationship between the second user object 22 and the second location object 32 is defined by a relationship "isIn" 43. The position data 22A of the employee 10 is stored in the second user object 22.

In such a case where the employee 10 stays at the office B, the attendance management application accesses the position data 22A of the employee 10 stored in the second user object 22 with the authority of the general affairs department 15. In this case, since the first user object 21 is in the relationship traced from the second user object 22 as a starting point, the access control device 100 permits to an access the position data 22A.

On the other hand, as illustrated in a lower portion of FIG. 8, when the employee 10 moves from the office B to home and stays at home, a master-slave relationship between the second user object 22 and the third location object 33 is newly defined by the relationship °isIn" 43. In such a case where the employee 10 stays at home, the attendance management application accesses the position data 22A of the employee 10 stored in the second user object 22 with the authority of the general affairs department 15. In this case, there is no first user object 21 in the relationship traced from the second user object 22 as a starting point. Therefore, the access control device 100 denies the access to the position data 22A.

In this way, the access control device 100 determines that there is an access authority by tracing the relationship between the plurality of objects and dynamically controls the permission and the denial of the access based on the determination result. In the present embodiment, the access control device 100 recursively determines whether the first user object 21 is included in the way through the relationship starting from the second user object 22 as a starting point based on the authority of the general affairs department 15. As a result, the access control device 100 dynamically controls the permission or the denial of the access.

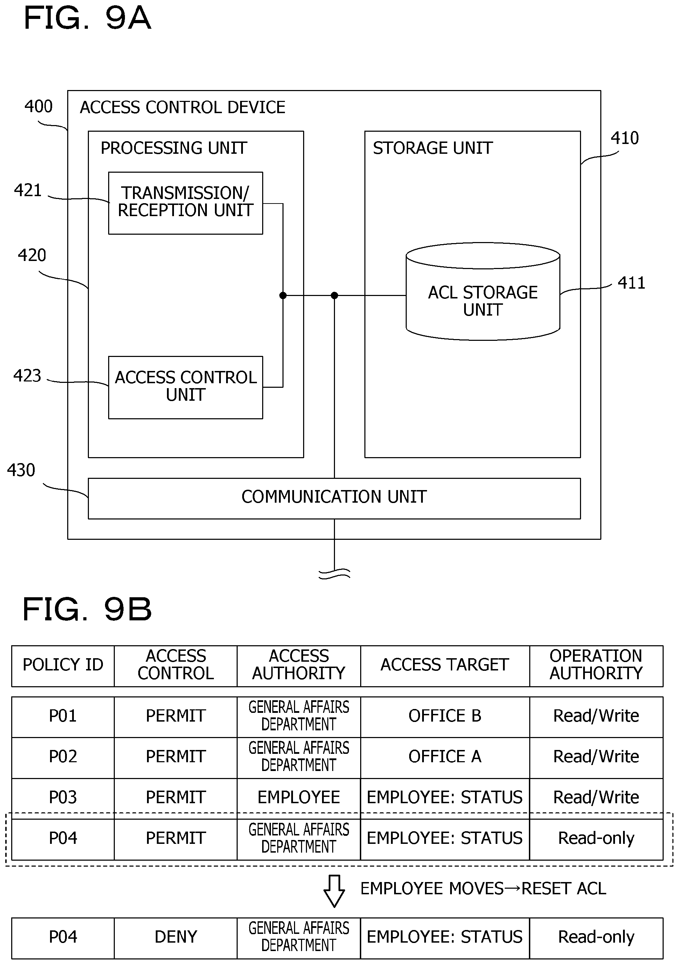

A comparative example will be described with reference to FIGs. 9A and 9B. Note that a configuration similar to that of the access control device 100 according to the first embodiment described with reference to FIG. 4A is denoted with a corresponding reference numeral, and detailed description thereof will be omitted. As illustrated in FIG. 9A, an access control device 400 according to the comparative example includes a storage unit 410, a processing unit 420, and a communication unit 430. The storage unit 410 includes an ACL storage unit 411. The processing unit 420 includes a transmission/reception unit 421 and an access control unit 423.

The ACL storage unit 411 stores an access control list. As illustrated in FIG. 9B, in the access control list, a plurality of access control policies are managed for each policy ID used to identify an access control policy. The access control policy may be referred to as an access control entry. The access control list is set by a system administrator of the digital twin system 200. The access control policy includes a plurality of items such as access control, an access authority, an access target, and an operation authority.

For example, an access control policy with a policy ID "P04" includes access control "permit", an access authority "general affairs department", an access target "employee: status", and an operation authority "Read-only". According to this access control policy, with the authority of the general affairs department 15, only a reading access to a current status (presence) of the employee 10 is permitted for the attendance management application. The current status includes, for example, current position data or the like of the employee 10.

Here, for the access control policy, in a case where the access from the attendance management application is permitted only between starting and quitting times of the employee 10, the system administrator is required to perform an operation for resetting the access control list. For example, as illustrated in FIG. 9B, between the quitting time to the starting time of the employee 10, from the viewpoint of ensuring the privacy of the employee 10, the system administrator resets the access control "permit" of the access control policy to access control "denial". As a result, the access from the attendance management application is denied.

Since such a setting operation by the system administrator requires to individually set various access control policies, the setting operation can be an extremely complicated work for the system administrator. Furthermore, in the present embodiment, the access control policy is set using the attendance management application as an example. However, for example, in a case where a payroll management application that is used with an authority of an accounting department, a personnel evaluation application used with an authority of a personnel department, or the like are used together, this may cause an enormous setting task.

However, according to the present embodiment, access control using the access control list is avoided. Therefore, an operation load by the system administrator is reduced. Furthermore, since an information amount of the relationship table is smaller (or less) than an information amount of the access control list, the access control device 100 can be implemented by the storage unit 110 that has a smaller storage capacity than a storage capacity of the storage unit 410. Moreover, the small information amount of the relationship table can reduce a processing load of the access control device 100 using the relationship table, as compared with a case where the access control list is used.

### (Second Embodiment)

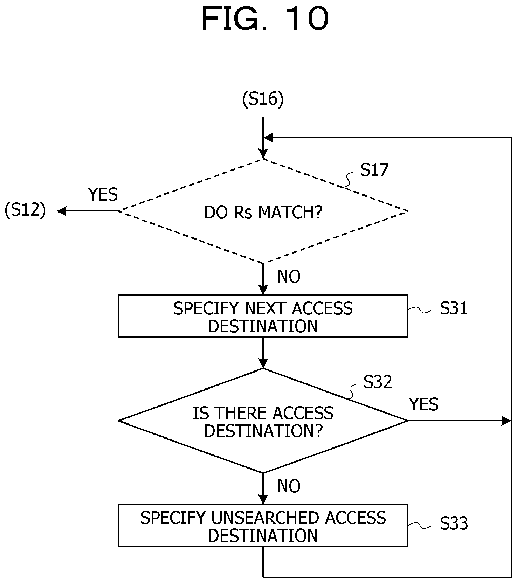

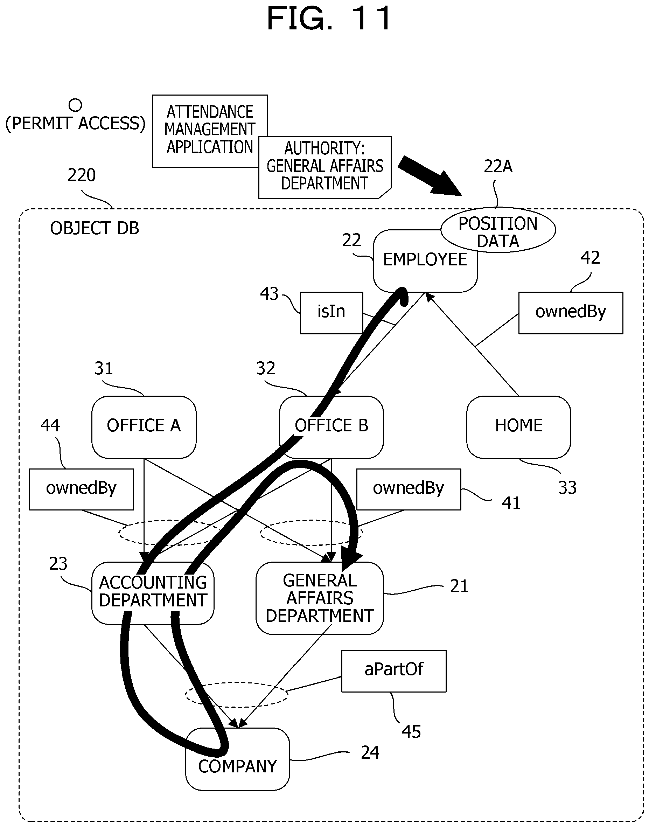

Next, a second embodiment of this case will be described with reference to FIGs. 10 and 11. First, as illustrated in FIG. 10, in a case where the relationships do not match in the processing in step S17 described above, an object determination unit 122 specifies a next access destination (step S31). In other words, in a case where a relationship stored in a first API response does not match a relationship stored in a relationship table, the object determination unit 122 specifies the next access destination.

For example, the object determination unit 122 repeats the processing in steps S12 to S17. As a result, as illustrated in FIG. 11, there is a case where a third user object 23 that manages an accounting department of a company as a system user appears in a way through a relationship °ownedBy" 44, starting from a second user object 22. Moreover, when a relationship "aPartOf" 45 is traced from a third user object 23, a fourth user object 24 that manages a corporation that is an example of the company, as a system user may appear.

Here, if the relationship "aPartOf" 45 that is not managed by the relationship table is stored in the third user object 23, the relationships do not match. In this case, the object determination unit 122 specifies the next access destination, based on the relationship. In the present embodiment, the object determination unit 122 specifies the fourth user object 24.

When specifying the next access destination, the object determination unit 122 determines whether there is an access destination (step S32). In a case where there is the access destination (step S32: YES), the object determination unit 122 executes the processing in step S17 again. In the present embodiment, since there is the fourth user object 24, the object determination unit 122 executes the processing in step S17 again.

On the other hand, in a case where there is no access destination (step S32: NO), the object determination unit 122 specifies an unsearched access destination (step S33), and the object determination unit 122 executes the processing in step S17 again. For example, in the present embodiment, as illustrated in FIG. 11, there is no access destination that can be accessed from the fourth user object 24 as a starting point. Therefore, the object determination unit 122 returns layers one by one according to the relationship and specifies, for example, the first user object 21 as the unsearched access destination. As a result, since identifiers "soumu" match, an access control unit 123 permits the access.

In this way, according to the second embodiment, even if the relationship that is not managed by the relationship table is stored in the first API response, there is a case where an access control device 100 can dynamically permit an access to position data 22A.

### (Third Embodiment)

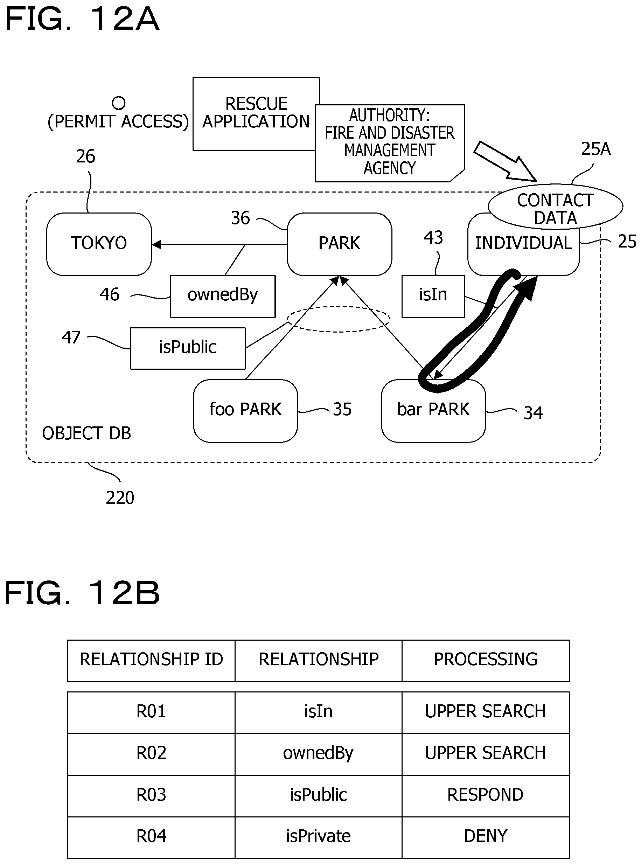

Next, a third embodiment of this case will be described with reference to FIGs. 12A and 12B. As illustrated in FIG. 12A, an object DB 220 stores a fifth user object 25 that manages an individual as a system user and a sixth user object 26 that manages Tokyo as a system user. Furthermore, the object DB 220 stores a fourth location object 34 that manages a bar park, a fifth location object 35 that manages a foo park, and a sixth location object 36 that manages a park.

A master-slave relationship between the fourth location object 34, the fifth location object 35, and the sixth location object 36 is defined by a relationship "isPublic" 47. A master-slave relationship between the sixth user object 26 and the sixth location object 36 is defined by a relationship °ownedBy" 46. Since the individual stays in the bar park, a master-slave relationship between the fifth user object 25 and the fourth location object 34 is defined by a relationship "isIn" 43. Contact data 25A representing a personal emergency contact number is stored in the fifth user object 25.

On the other hand, in a relationship table according to the third embodiment, as illustrated in FIG. 12B, a relationship "isPublic" with a relationship ID "R03" is managed, in addition to the relationships described in the first embodiment. Furthermore, in the relationship table according to the third embodiment, a relationship °isPrivate" with a relationship ID "R04" is managed. Processing "respond" and processing "deny" are respectively associated with the relationship °isPublic" and the relationship "isPrivate".

Here, for example, in a case where the individual stays in the bar park in a state where the individual lies down due to injury, a rescue application accesses the contact data 25A of the individual stored in the fifth user object 25, with an authority of the Fire and Disaster Management Agency. In this case, when the relationship is traced starting from the fifth user object 25, the fourth location object 34 appears.

In such a case, when an API request is transmitted to an API server 210 with a URL representing the fourth location object 34 after the fifth user object 25, a transmission/reception unit 121 receives a first API response corresponding to the API request. Although not illustrated, an identifier "yoyogi" used to identify the fourth location object 34 is stored in the first API response transmitted from the API server 210. Furthermore, an identifier "park" associated with the relationship "isPublic" is stored in the first API response. The identifier "park" is an identifier of the sixth location object 36.

In this way, in a case where the transmission/reception unit 121 receives the first API response that stores the relationship "isPublic", determination by an object determination unit 122 is omitted, and an access control unit 123 immediately refers to the relationship table. Then, if the relationship "isPublic" managed by the relationship table is associated with the processing "respond", the access control unit 123 permits the access to the contact data 25A from the rescue application.

Even if the transmission/reception unit 121 receives the first API response that stores the relationship °isPrivate", similarly, the determination by the object determination unit 122 is omitted, and the access control unit 123 immediately refers to the relationship table. Then, if the relationship °isPrivate" managed by the relationship table is associated with the processing "denial", the access control unit 123 denies the access.

Even in such a third embodiment, it is possible to realize access control that avoids an access control list. Furthermore, according to the third embodiment, by expanding processing content of the relationship, it is possible to realize access control that allows immediate response or immediate denial.

### (Fourth Embodiment)

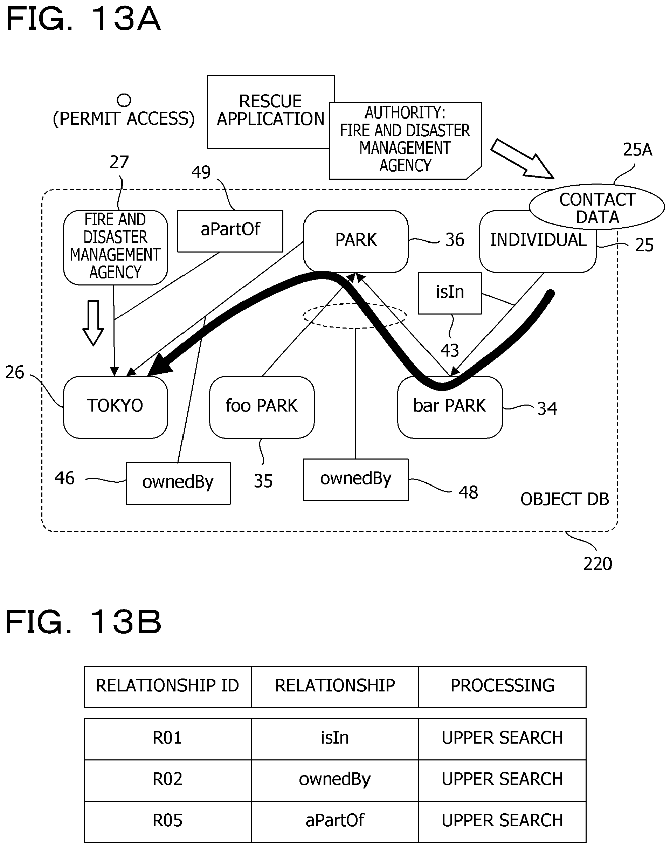

Next, a fourth embodiment of this case will be described with reference to FIGs. 13A and 13B. Note that a configuration same as that in the third embodiment is denoted with the same reference numeral, and detailed description thereof will be omitted. As illustrated in FIG. 13A, an object DB 220 further stores a seventh user object 27 that manages the Fire and Disaster Management Agency as a system user.

A master-slave relationship between a fourth location object 34, a fifth location object 35, and a sixth location object 36 is defined by a relationship "ownedBy" 48. A master-slave relationship between a sixth user object 26 and the seventh user object 27 is defined by a relationship "aPartOf" 49.

On the other hand, in a relationship table according to the fourth embodiment, as illustrated in FIG. 13B, a relationship "aPartOf" with a relationship ID "R05" is managed, in addition to the relationships described in the first embodiment. Processing "upper search" is associated with the relationship "aPartOf".

Here, as in the third embodiment, in a case where the individual stays in the bar park in a state where the individual lies down due to injury, a rescue application accesses the contact data 25A of the individual stored in the fifth user object 25, with the authority of the Fire and Disaster Management Agency. In this case, when the relationship is traced starting from the fifth user object 25, the fourth location object 34 appears. Furthermore, when the relationship is traced starting from the fourth location object 34, the sixth location object 36 appears. When the relationship is traced starting from the sixth location object 36, the sixth user object 26 appears. However, the sixth user object 26 does not necessarily store an identifier "fire" corresponding to the authority of the Fire and Disaster Management Agency.

In this way, in a case where a relationship regarding access permission or denial is unknown at the time when search for an object that is an access destination ends, an object determination unit 122 searches for an object corresponding to the access source. Then, the object determination unit 122 determines whether there is an object having a superordinate concept common to the object that the object determination unit 122 is searching for. According to the present embodiment, the object determination unit 122 refers to the object DB 220, based on the identifier "fire" corresponding to the authority of the Fire and Disaster Management Agency.

When the object determination unit 122 finds the seventh user object 27 that stores the identifier "fire", the object determination unit 122 traces the relationship "aPartOf" 49 stored in the seventh user object 27 and finds the sixth user object 26. As a result, the object determination unit 122 determines that the sixth user object 26 has a common superordinate concept of the seventh user object 27 and the sixth location object 36. When the object determination unit 122 determines in this way, an access control unit 123 permits an access from the rescue application to the contact data 25A. Even in such a fourth embodiment, it is possible to realize access control that avoids an access control list.

Although the preferred embodiments have been described above in detail, the embodiments are not limited to specific embodiments, and various modifications and alterations may be made within the scope of the present embodiments described in the claims.

## Claims

1. An access control method performed by a computer, the method comprising:
in a case where an access to data stored in a second user object included in a plurality of objects is accepted from a first system user that corresponds to a first user object included in the plurality of objects, for a management system that manages the plurality of objects that includes a user object that manages a system user and a location object that manages a location and a master-slave relationship between the user object and the location object, determining whether there is the first user object in a way in which the master-slave relationship is traced as starting from the second user object, and
in a case where there is the first user object, permitting the access.

2. The access control method according to claim 1, wherein in a case where there is no first user object, the access is denied.

3. The access control method according to claim 1 or 2, wherein in a case where a first request that requests an access to the second user object is accepted, the first request is directly transmitted to the management system.

4. The access control method according to claim 1or 2, wherein in a case where a second request that requests an access to the data is accepted, the second request is converted into a first request that requests an access to the second user object and transmits the first request to the management system.

5. The access control method according to claim 1 or 2, wherein whether there is the first user object in the way in which the master-slave relationship is traced as starting from the second user object is recursively determined based on an authority of the first system user.

6. The access control method according to claim 1 or 2, wherein the management system manages the plurality of objects and the master-slave relationship by using a Linked-Data format.

7. The access control method according to claim 1 or 2, wherein the management system updates the plurality of objects and the master-slave relationship based on a movement of a second system user that corresponds to the second user object.

8. The access control method according to claim 1 or 2, wherein an information amount of a table that manages the master-slave relationship is smaller than an information amount of a list to which an access control policy needed for access control is set.

9. An access control program causing, when executed by a computer, the computer to perform a process comprising:
in a case where an access to data stored in a second user object included in a plurality of objects is accepted from a first system user that corresponds to a first user object included in the plurality of objects, for a management system that manages the plurality of objects that includes a user object that manages a system user and a location object that manages a location and a master-slave relationship between the user object and the location object, determining whether there is the first user object in a way in which the master-slave relationship is traced as starting from the second user object, and
in a case where there is the first user object, permitting the access.
